(19) **Europäisches Patentamt / European Patent Office / Office européen des brevets**

(11) **EP 3 217 310 B1**

(12) **EUROPEAN PATENT SPECIFICATION**

(45) Date of publication and mention
of the grant of the patent:
**05.05.2021 Bulletin 2021/18**

(51) Int Cl.:
*G06F 21/57* *(2013.01)*

(21) Application number: **16159478.3**

(22) Date of filing: **09.03.2016**

(54) **HYPERVISOR-BASED ATTESTATION OF VIRTUAL ENVIRONMENTS**

HYPERVISOR-BASIERTE ATTESTIERUNG VIRTUELLER UMGEBUNGEN

ATTESTATION DES ENVIRONNEMENTS VIRTUELS BASÉ SUR UN HYPERVISEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.09.2017 Bulletin 2017/37**

(73) Proprietor: **Huawei Technologies Co., Ltd.
Longgang District
Shenzhen, Guangdong 518129 (CN)**

(72) Inventors:
• **KUNTZE, Nicolai
80992 Munich (DE)**
• **LAUER, Hagen
80992 Munich (DE)**
• **RUDOLPH, Carsten
80992 Munich (DE)**

(74) Representative: **Körber, Martin Hans
Mitscherlich PartmbB
Patent- und Rechtsanwälte
Sonnenstrasse 33
80331 München (DE)**

(56) References cited:
• **AIMIN YU ET AL: "Obtaining the Integrity of Your Virtual Machine in the Cloud", CLOUD COMPUTING TECHNOLOGY AND SCIENCE (CLOUDCOM), 2011 IEEE THIRD INTERNATIONAL CONFERENCE ON, IEEE, 29 November 2011 (2011-11-29), pages 213-222, XP032098823, DOI: 10.1109/CLOUDCOM.2011.37 ISBN: 978-1-4673-0090-2**

• **Abdul Basit: "Royal Institute of Technology, Sweden Master Thesis APPROACHES FOR ATTESTING VIRTUALIZED ENVIRONMENTS Supervisors Nicolai Kuntze Micael Lundvall Approaches for Attesting Virtualized Environments", , 8 October 2014 (2014-10-08), XP055271220, Retrieved from the Internet: URL:http://web.archive.org/web/20141008100 618/http://sit.sit.fraunhofer.de/smv/publi cations/download/AbdulBasit_Master.pdf [retrieved on 2016-05-09]**

• **Specification: "TCG Virtualized Trusted Platform Architecture Specification", ContactLiberty@amd.com, 27 September 2011 (2011-09-27), XP055271292, Retrieved from the Internet: URL:http://www.trustedcomputinggroup.org/w p-content/uploads/TCG_VPWG_Architecture_V 1 -0_R0-26_FINAL.pdf [retrieved on 2016-05-09]**

• **FREDERIC STUMPF ET AL: "Improving the scalability of platform attestation", PROCEEDINGS OF THE 3RD ACM WORKSHOP ON SCALABLE TRUSTED COMPUTING, STC '08, 1 January 2008 (2008-01-01), page 1, XP055271227, New York, New York, USA DOI: 10.1145/1456455.1456457 ISBN: 978-1-60558-295-5**

• **GARFINKEL T: "Terra: a virtual machine-based platform for trusted computing", ACM SOSP. PROCEEDINGS OF THE ACM SYMPOSIUM ON OPERATING SYSTEMSPRINCIPLES; 20031019, 12 October 2003 (2003-10-12), pages 193-206, XP002340992,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 217 310 B1

• **Will Arthur ET AL: "A practical guide to TPM 2.0", ,
31 December 2015 (2015-12-31), XP055537666,
Retrieved from the Internet:
URL:https://link.springer.com/book/10.1007
/978-1-4302-6584-9 [retrieved on 2018-12-21]**

**Description**

TECHNICAL FIELD

The present invention generally relates to the field of remote attestation, and particularly to a method for remote attestation, by an appraiser, of a target comprising a hypervisor running one or more virtual machines. The present invention further relates to an appraiser for remote attestation of a target, and to a target configured to be attested by an appraiser by remote attestation.

BACKGROUND

Several years ago, virtualization technologies and hypervisors celebrated their rediscovery and today virtualization is used in a variety of applications. Especially network operators have discovered the cost-effectiveness, flexibility, and scalability of virtualizing network functions (NFV). However, in light of the current events and security breaches related to platform software manipulation the use of Trusted Computing technologies becomes not only more popular but also mandatory to provide means of protection and detection. While Trusted Computing concepts for hardware platforms are available and already in use, the extension of these concepts to virtualized environments and virtual platforms are underdeveloped or not suitable for larger scale virtualization with multiple virtual machines (VM). Especially current remote and deep attestation protocols for virtual machines support only a very limited amount of virtual machines before the inefficient use of the Trusted Platform Module (TPM) becomes a crucial bottleneck.

Trusted Computing, known e.g. from Trusted Computing Group, "TPM Main Specification Version 1.2", Revision 116, TCG, 2011. is a set of technologies that provide hardware and software support for secure storage and software integrity protection. Its integration into virtualized computing systems enables the hardware-based protection of private i.e. sensitive information and the detection of malicious software that aims to subvert the operation of virtualized environments.

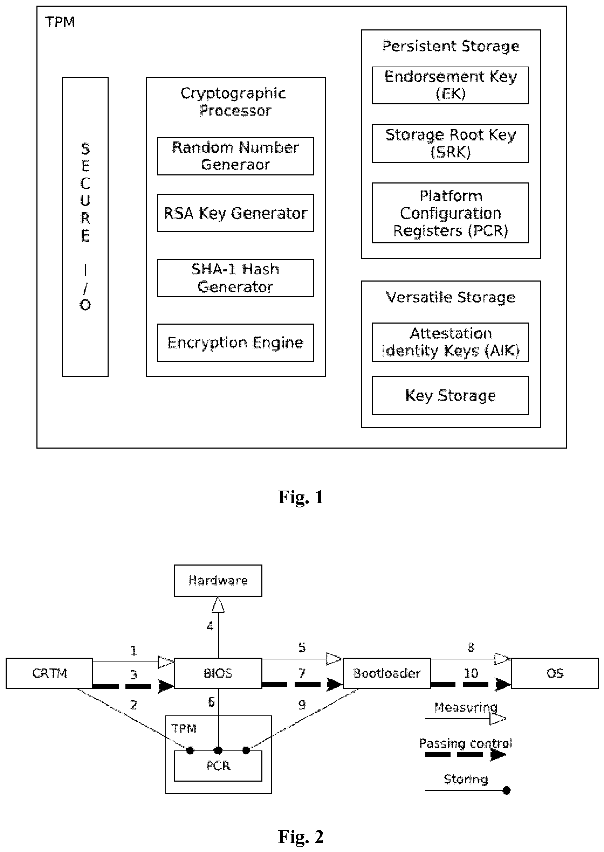

Trusted Platform Module (TPM) is a security specification defined by the Trusted Computing Group, see e.g. Trusted Computing Group, "TPM Main Specification Version 1.2", Revision 116, TCG, 2011. Its implementation is available as a chip that is physically attached to a platforms motherboard and controlled by software running on the system using well-defined commands. Fig. 1 shows internal components of such a known Trusted Platform Module.

The current implementation of the TPM is a tamper-evident hardware chip. Other major components of the TCG proposal are pre-BIOS (Basic I/O System) hardware and software components called the Core Root of Trust for Measurement (CRTM), which is supposed to ensure that platform states are recorded in the TPM.

A virtual TPM (vTPM) is the Trusted Platform Module (TPM) instance associated with a single VM. The vTPM may be a component consisting of software or hardware that supports functionality described in TCGs TPM specification, see e.g. Trusted Computing Group, "TPM Main Specification Version 1.2", Revision 116, TCG, 2011. A vTPM may be of software running in the Host OS / Hypervisor / Virtual Machine Monitor (VMM). Different vTPM implementations can offer differing levels of assurance based upon its supported threat model, but for the present invention these different implementations are still considered as a vTPM. More generally, while the present document refers to vTMPs, it is clear that any security module implementing the functionality of a TPM can be considered and the present discussion is not limited to TPM-based implementations.

In the followings, some features of the technological background will be presented.

As anti-malware (AM) software has become better at detecting runtime malware, attackers are also becoming better at creating rootkits that can hide from detection. Detecting malware that starts early in the boot cycle is a challenge that most AM vendors address diligently. Currently, AM vendors create system protection solutions that are not supported by the host operating system and can potentially result in placing the computer in an unstable state. Trusted Boot, however, measures each component from firmware up through the boot start drivers, stores those measurements in the Trusted Platform Module (TPM) on the machine, and then makes a log available that can be verified remotely to attest state of the platform. In this respect, Fig. 2 shows a Trusted Boot scheme from CRTM to OS describing measurement and control flow.

Integrity Measurement Architecture (IMA) is an open source trusted computing component. IMA maintains a runtime measurement list (SML) and, if anchored in a hardware Trusted Platform Module (TPM) using Platform Configuration Register (PCR), an aggregate integrity value over this list (Template Hash). The benefit of anchoring the aggregate integrity value in the TPM is that the measurement list cannot be compromised by any software attack, without being detectable. Hence, on a trusted boot system, IMA can be used to extend the chain in Fig. 2 from OS to Applications by preforming runtime measurements.

Remote Attestation (RA) is the activity of making a claim about properties/state of a target by supplying evidence, which supports the claim to an external appraiser. In the context of the present invention, this evidence is based on the contents of a TPMs PCRs, which at the point of an attestation are filled with the input provided by Trusted Boot and IMA or any other measurement architecture. An appraiser is a party, generally a computer on a network, making a decision about some other party. In the context of the present invention case target parties are Host and Guest OSes. Remote Attestation also involves cryptographic protocols to supply the sensitive evidence data to an appraiser. Remote Attestation Protocols make use of public-key encryption using a TPM's Quote command along with it's Attestation Identity Key (AIK) which is an asymmetric key pair whose public portion is known to the appraiser. The use of Remote Attestation will allow an appraiser to detect potentially malicious changes in the software configuration of a target platform.

Deep Attestation describes the procedure of attesting multiple layers of a virtualized system. A deep attestation could be necessary if an appraiser needs to assess the trustworthiness of a VM, the underlying hypervisor and potentially attestation evidence all the way down to the underlying hardware roots of trust e.g. physical TPM. In this respect, it is referred e.g. to Trusted Computing Group, "Virtualized Trusted Platform Architecture Specification", Version 1.0, TCG, 2011. Schemes allowing for deep attestation might include quotes from both virtual and physical TPMs.

Deep attestation is considered the strongest form of a VM attestation. It must be considered that the attestation of a VM all by itself is meaningless if its underlying hypervisor is potentially malicious. A simple example for this might be the attestation of a virtualized network function that holds certain secrets to identify itself in a network. The attestation of this VM might lead to the conclusion that the VM is running fine and the software configuration is operating as defined and therefore it is considered fully operational. However, this conclusion can easily be spoiled by a malicious hypervisor which might eavesdrop on I/O and leak credentials or even tamper with I/O. Therefore, a hypervisor attestation should be supplied alongside a VM attestation in a way that allows an appraiser to link them. Currently, existing concepts either provide this attestation link between layers or they scale in large virtualization environments, see e.g. Trusted Computing Group, "Virtualized Trusted Platform Architecture Specification", Version 1.0, TCG, 2011.

In the followings, problems and security requirements in virtual environments, particularly attack scenarios and attestation requirements, will be presented.

Regarding attack scenarios, one of the most common threats for any system whether physical or virtual is the execution of malicious applications. Execution of malicious applications might be the result of a user installing malicious software unintentionally or intentional modification of installed binaries. However, these applications do not interfere with the OS or other processes. A practical example would be an application that deletes all user files. These attacks might not be critical to the OS itself but in a lot of cases a single malicious user space application might be enough to compromise secrets both in the host OS and in the virtual machine. This threat increases if the malware is aimed at a lower system level, e.g. the kernel and processes in kernel space. If a malware is able to successfully implant itself into kernel processes virtually all secrets are potentially accessible.

An even more dangerous and probably the hardest detectable type of system infection can be created by injecting malware into code that is executed well before any kernel code is executed. This type of malware is commonly referred to as a rootkit. Rootkits are especially problematic since common system tools and anti virus programs fail to provide means of detection or protection against them. All named and unnamed threats to the hardware and software configuration underlying a virtual environment also apply to a virtual environment itself. However, the biggest and commonly undetected threat for a virtual environment and a virtualized network function in particular is a malicious hardware/software configuration in its host OS. Although not mentioned frequently, the hypervisor should also be able to determine a VM's health in terms of platform and software configuration. A prominent attack against hypervisors and their host OS is called VM escape. VM escape attacks try to execute code on the hypervisors behalf, thereby bypassing any security mechanisms of the system and gaining full control of the physical platform. This kind of attack could be performed by creating malicious VM images or infecting running VM images.

Regarding attestation requirements, the remote attestation process itself has been defined in Trusted Computing Group, "Virtualized Trusted Platform Architecture Specification", Version 1.0, TCG, 2011. However, MITRE has developed five principles or requirements for remote attestation and remote attestation architectures, see e.g. George Coker et al., "Principles of Remote Attestation The MITRE Corporation", National Security Agency, 2011.

Principle I is Fresh Information, although the wording might suggest the usage of a Nonce, n only once, as something the appraiser uses to challenge a target in order to mitigate replay attacks, this requirement actually refers to the type of information which is supplied to the appraiser. MITRE suggests using information as fresh as possible. The supplied information should contain measurements of a running system rather than just disk images. A set of technologies or measurement architectures like trusted boot and IMA providing information from boot time up until launch of user applications currently provide the most valuable information in terms of freshness.

Principle II suggests Comprehensive Information. An attestation mechanism should be capable of delivering meaningful information about the target. An appraiser should be capable to evaluate a target's internal state based upon the supplied information. This requirement can be partially fulfilled by supplying IMA's log file, i.e. Stored Measurement Log (SML), along with a TPM Quote over the requested PCR. By providing the PCR as well as the SML an appraiser is able to verify the integrity of this log as well as the platform state and its configuration. As suggested by George Coker et al., "Principles of Remote Attestation The MITRE Corporation", National Security Agency, 2011, as well as by Ahmad-Reza Sadeghi et al., "Property-Based TPM Virtualization", Ruhr-University Bochum, Bochum, 2008, this also raises privacy issues that are out of scope in a private cloud and NFV scenario.

This concern of disclosure leads to Principle III - Constrained Disclosure. A target should only reveal information on its internal state to parties that can be identified as valid appraisers. This can be achieved by forcing the appraiser to reveal information about itself, by the use of cryptography, or by using exclusive channels over which attestation information is exchanged.

Principle IV states Semantic Explicitness of attestation contents should be guaranteed and contents should be provided in a logical form. The semantics used in the attestation should not only allow the identification of the target but also allow an appraiser to correlate multiple attestations. Consequently, an appraiser should be able to infer consequences from several attestations, e.g. when different measurements of the target jointly imply a prediction about its behavior. This requirement can easily be fulfilled, again, by using IMA's SML as the crucial part of a reporting mechanism.

The fifth principle (V) is the use of a trustworthy mechanism by which information/evidence is delivered to an appraiser. This is supposed to guarantee that the information/evidence itself can be trusted. This requirement is typically met by the use of a TPM Quote that is equivalent to a digital signature ensuring integrity and authenticity of the provided information.

These five principles are sufficient for an individual platform, e.g. a PC or IoT device. For virtualization, two more requirements are added in accordance with the ongoing standardization work, see e.g. Trusted Computing Group, "Virtualized Trusted Platform Architecture Specification", Version 1.0 TCG, 2011, considering the nature of virtual environments:

Principle VI - Layer Linking. Layer linking requires for a VM attestation to be tied to an attestation of its underlying components that might be the hypervisor or host OS itself. Attesting a virtual platform without an inspection of its underlying physical platform is possible using the same remote attestation protocols, however, conclusions based solely on this attestations are vague.

Principle VII - Scalability. Based on Principle VI, an attestation of a physical platform should be provided alongside an attestation of a virtual platform to support the claims made in the information received by an appraiser. The TPM Quote command is a time consuming operation with delays up to 500ms and above. Attestation schemes must treat this as a bottleneck and refrain from frequent use or provide means to fulfill VI with the physical limitations.

In the followings, a first known approach for VM attestation - Separate Hypervisor and VM Attestations - will be presented.

A possible approach is attesting virtual and physical environments using the same attestation mechanism, however, it is not resource conserving and the physical TPM will become a crucial bottleneck for attestations.

Approaches treating VM and hypervisor attestations equally are easy to integrate into existing attestation architectures, they require little to no modifications to an attestation implementation on a target system, and VM's and physical devices can be treated equally from the perspective of an appraiser.

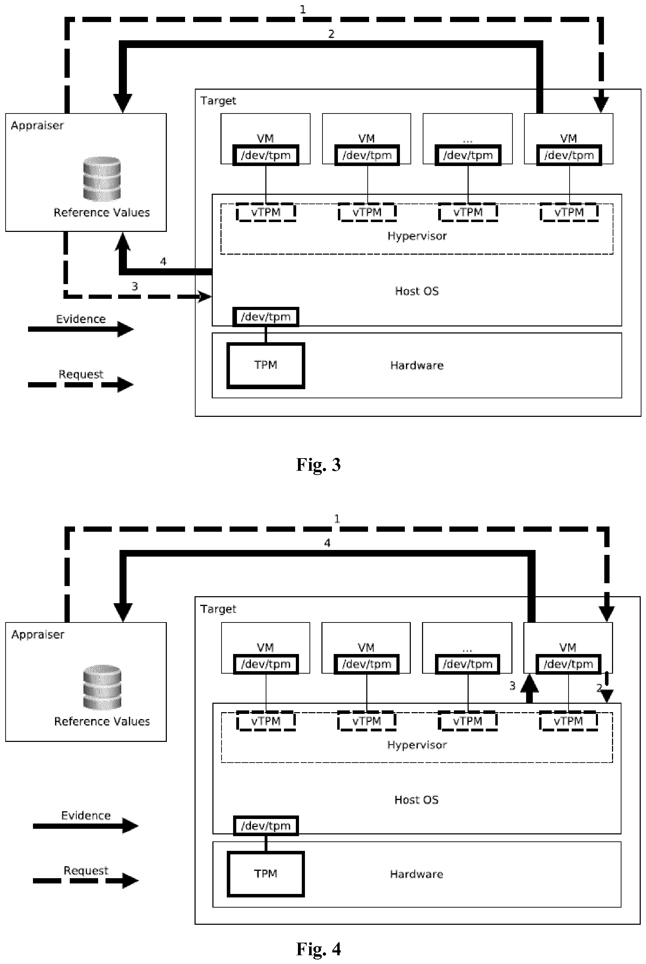

In this respect, Fig. 3 shows separate hypervisor and VM attestation. The appraiser attests the VM first and continues attesting the hypervisor using the same attestation mechanisms and protocols.

However, in approaches based on separate attestations the VMs may be manipulated through the hypervisor if VMs and associated vTPMs are not isolated from other VMs and the hypervisor itself. In other words in such approaches mechanisms must be given through which a hypervisor is not capable of manipulating a VMs execution. Furthermore, a vTPM process once launched must be isolated from hypervisor as well. Under no circumstances must information contained in the vTPM be exposed to any other party than the associated VM. If sufficient mechanisms were in place to validate these assumptions a VM could be attested using the same remote attestation protocol as a physical platform while creating equally meaningful evidence.

An appraiser can now believe that these isolation mechanisms are in place and operational when attesting a VM or it has to assess the state of the underlying platform. This means that scalability will suffer if for every VM attestation a separate hypervisor attestation is required. Strong isolation also precludes Layer Linking between VM, hypervisor, and physical platform. When attesting a VM, an appraiser would through some mechanisms need to receive reliable information on the underlying platform. This can be achieved by maintaining a database containing VMs and their locality. Consequently, no VM launch or migration can happen without updating the database. This requirement leverages this approach to a new level of complexity, since mechanisms have to be in place that either (i) prevent the hypervisor from changing a VMs locality without authorization or (ii) force the hypervisor to report changes to a VMs locality.

Alternatively, a VM and a hypervisors attestation can be linked using a secret that is only known to the VM and its hypervisor. This could be achieved by sending a nonce N unknown to a hypervisor to a VM. The VM can now be attested using N. Subsequently, the expected hypervisor is attested. Unlike traditional approaches, the hypervisor does not receive a nonce. The appraiser expects the VM to contact its hypervisor through an exclusive channel and supply him with N. Unfortunately, this approach also violates the scalability principle VII and no longer treats VMs and hypervisors equally.

A final remark on separate VM and hypervisor attestations relates to the ordering of attestations: A VM attestation must be followed by the attestation of its hypervisor. This simple principle is based on the theory of causal ordering and the technicality that a hypervisor could influence a VM. This implies that whenever a VM is attested the created evidence remains questionable until its underlying hypervisor has been attested proving that at the time of the VM attestation the hypervisor also was in a good state. Consequently, an appraiser might be able to use the same protocols for individual attestations but will not be able to treat the created evidence equally. Ultimately, separate hypervisor and VM attestations work under an extensive set of assumptions and preconditions that obviously leave room for attackers.

In the followings, a second known approach for VM attestation - Deep Attestation - will be presented.

Deep Attestation mechanisms attest hypervisors indirectly through VMs using VM attestation credentials (eAIK) bound to physical platform PCRs representing the platform configuration. Unfortunately, this mechanism provides insufficient evidence in terms of freshness.

TCG's Virtualized Platform Work Group has defined an attestation scheme with little usage of the physical TPM based on the concept of ephemeral Attestation Identity Keys (eAIK) in a VM, see e.g. Trusted Computing Group, "Virtualized Trusted Platform Architecture Specification", Version 1.0, TCG, 2011. The concept is based on the fact that every VM has a set of credentials in its own vTPM consisting of at least an Endorsement Key, see e.g. Trusted Computing Group, "TPM Main Specification VersionI.2", Revision 116, TCG, 2011. Once a VM is associated with a vTPM an eAIK is created. This eAIK is now used whenever the VM is attested.

In this respect, Fig. 4 shows Deep Attestation Method as proposed by TGC. The concept is based on indirect attestation of the underlying hypervisor through a VM using credentials in the vTPM bound to PCR values in the platform TPM.

The Work Group defines that the eAIK is supposed to reflect the state of its underlying platform. This could be achieved by binding this eAIK to a set of PCRs of the hypervisor/host OS. Unfortunately, PCRs are either predictable or they reflect the platform state in detail. The lower number <10 PCRs in a TPM typically contain measurements of a systems boot sequence. They might for instance contain measurements of the BIOS or the boot record. The main problem of binding information such as keys to a TPMs PCR is their consistency. Keys are bound to PCR values using policies that define at which PCR value the TPM is allowed to release the information. Up until a certain point, i.e. loading of the kernel, including measurements of individual modules, a set of expected PCR values can be defined and used as a policy. Past this point, PCRs become fragile since the loading process and therefore the measurement order becomes more or less random due to runtime specific optimizations. This creates a hard limit for the freshness of information that can be supplied using an eAIK bound to a PCR. Unfortunately, this approach precludes the usage of advanced measurement architectures like IMA due to their frequent and runtime specific PCR updates.

A variation of this approach is a combination of code in the hypervisor and assessment of the hypervisor/host OS. The code, as extension to a hypervisor, is supposed to remove all eAIKs of hosted VMs and associated vTPMs in case of a software configuration change in the hypervisor. However, the owner of a VM would have to either trust this extension, e.g. assume that it is in place and operational, or assess the hypervisor code. This assessment then again requires the use of remote attestation whenever a VM owner or defined policy decides not to trust the hypervisor. This variation of the scheme potentially includes an advanced measurement architecture like IMA while negating any claims of scalability due to its extensive use of TPM Quotes.

A drawback of current remote and deep attestation protocols for virtual machines is that they may only support a limited amount of virtual machines. For an increasing number of virtual machines, the inefficient use of the Trusted Platform Module (TPM) becomes indeed a crucial bottleneck of the attestation.

Aimin Yu et al. "Obtaining the integrity of your virtual machine in the cloud" CLOUD COMPUTING TECHNOLOGY AND SCIENCE (CLOUDCOM), 2011 IEEE THIRD INTERNATIONAL CONFERENCE ON, IEEE, 29 November 2011 (2011-11-29), pages 213-222 discloses a method for verifying the integrity of a VM rented from a cloud service.

Abdul Basit: "Royal Institute of Technology, Sweden Master Thesis APPROACHES FOR ATTESTING VIRTUALIZED ENVIRONMENTS" describes a remote attestation protocol for virtualized systems.

SUMMARY

Having recognized the above-mentioned disadvantages and problems, the present invention aims to improve the state of the art. In particular, the object of the present invention is to provide a method for remote attestation, by an appraiser, of a target comprising a hypervisor running one or more virtual machines, as well as to provide an appraiser for remote attestation of a target, and a target configured to be attested by an appraiser by remote attestation.

The present invention particularly intends to improve the remote attestation of hypervisor and virtual machines. The invention also intends to propose a scalable remote attestation scheme suitable for private cloud and NFV use cases supporting large amounts of VM attestation by efficient use of a security module implemented in the target device. The security module may be implemented for instance as a TPM and embedded in the target as physical TPM chip or implemented as software module.

The above-mentioned object of the present invention is achieved by the solution provided in the enclosed independent claims. Advantageous implementations of the present invention are further defined in the respective dependent claims.

In the following the term concatenation will be used, for instance with reference to the generation of memory register values. The term concatenation is used here with its mathematical meaning and in particular refers to the operation of joining numerical values by their numerals (indicated with the symbol II). By convention, in the present document concatenation of one value will correspond to the value itself. Optionally the concatenation operation may also include secure compression or encryption of the generated joined value.

The present invention is defined be the independent claims. Embodiments labelled as inventive embodiments in the following, which are not covered by the scope of protection defined by the independent claims, are to be understood as examples helpful for understanding the invention, but not as embodiments of the invention.

A first aspect of the present invention provides a target device configured to be attested by an appraiser by remote attestation. The target device comprises a Virtual Machine Manager, VMM, running one or more virtual machines, and is configured to:

- receive from the appraiser an attestation request,
- collect virtual machine attestation information about the one or more virtual machines,
- generate a virtual machine integrity value based on at least part of the collected virtual machine attestation information,
- generate a digital signature for the VVM based on the virtual machine integrity value, and
- send the generated digital signature and the virtual machine attestation information to the appraiser as a response to the attestation request,
  wherein the target device further comprises
- a security module configured to generate the digital signature for the VMM, wherein the digital signature is generated based on the virtual machine integrity value and on a memory register value corresponding to the security module, the memory register value including at least one measurement of the VMM.

Thereby, the appraiser is able to attest the VMM and the one or more virtual machines based on the response to the attestation request. Also, only one digital signature is necessary for attesting the VMM and the virtual machines.

Particularly, the virtual machine integrity value is generated by concatenating the at least part of the collected virtual machine attestation information.

In an implementation form of the target device, each virtual machine is associated with a virtual security module and a corresponding virtual memory register value, the virtual memory register value including at least one virtual machine measurement of the associated virtual machine, and the virtual machine integrity value is calculated on the basis of the at least one virtual memory register value. Thereby, the integrity of the attestation data regarding the virtual machines can be verified without necessitating additional digital signatures.

In an implementation form of the target device, the virtual machine attestation information further includes a virtual machine measurement report for each virtual machine, the virtual machine measurement report including at least one virtual machine measurement of the corresponding virtual machine, and the virtual memory register value includes at least one virtual machine measurement of the associated virtual machine in that the virtual memory register value is a concatenation of the at least one virtual machine measurement included in the virtual machine measurement report. In other words, the virtual memory register value is generated by performing a mathematical concatenation of the at least virtual machine measurement included in the virtual machine measurement report. Optionally, said concatenation can be securely compressed or encrypted. Thereby, the integrity of the attestation data regarding the virtual machines can be verified.

In an implementation form of the target device, the target device being further configured to generate a VMM measurement report, the VMM measurement report comprising at least one VMM measurement, and send the VMM measurement report to the appraiser along with the generated digital signature and the virtual machine attestation information. Thereby, the integrity of the attestation data regarding the VMM can be verified.

In an implementation form of the target device, the target device comprises an attestation manager. The attestation manager is configured to compute the virtual machine integrity value by concatenating the virtual memory register value of at least one virtual machine. The security module is configured to receive as input the virtual machine integrity value and generate the digital signature by means of a private key. Thereby, the digital signature can be used for attesting the VMM and virtual machines.

In an implementation form of the target device, the target device is configured to collect the virtual machine attestation information of at least one virtual machine by reading the virtual memory register value of the virtual security module corresponding to the least one virtual machine, and receiving the virtual machine measurement report stored the at least one virtual machine.

In an implementation form of the target device, the attestation request received from the appraiser comprises a nonce, the target device being configured to generate the virtual machine integrity value based on the at least part of the collected virtual machine attestation information and on the nonce.

The functions of the target device according to the first aspect of the invention and any functions of any of its implementation forms may be performed by a processor or a computer, and any of their means may be implemented as software and/or hardware in such a processor or computer.

A second aspect of the present invention provides a method for responding to an attestation request received by a target device from an appraiser for remote attestation of the target device, the target device comprising a Virtual Machine Manager, VMM, running one or more virtual machines, and wherein the target device

- receives from the appraiser the attestation request,
- collects virtual machine attestation information about the one or more virtual machines,
- generates a virtual machine integrity value based on at least part of the collected virtual machine attestation information,
- generates a digital signature for the VVM based on the virtual machine integrity value, and
- sends the generated digital signature and the virtual machine attestation information to the appraiser as a response to the attestation request.

Further features or implementations of the method according to the second aspect of the invention may perform the functionality of the target device according to the first aspect of the invention and its different implementation forms.

The method according to the second aspect of the invention or any of its implementation forms may be performed by a processor or a computer.

A third aspect of the present invention provides an appraiser for remote attestation of a target device comprising a Virtual Machine Manager, VMM, running one or more virtual machines, the appraiser being configured to:

- send an attestation request to the target device,
- receive from the target device a response to the attestation request comprising a digital signature for the VVM and virtual machine attestation information about the one or more virtual machines,
- obtain a first virtual machine integrity value from the digital signature,
- calculate a second virtual machine integrity value based on at least part of the received virtual machine attestation information, and
- verify the integrity of the received virtual machine attestation information depending on the a comparison of the first and second virtual machine integrity values
- obtain a memory register value from the digital signature, the memory register value (PCR) storing at least one measurement of the VMM,

wherein the received response to the attestation request comprises a VMM measurement report, the VMM measurement report comprising at least one VMM measurement, and
wherein the appraiser is configured to attest the VMM on the basis of the memory register value and the VMM measurement report.

Thereby, the appraiser is able to attest the VMM and the one or more virtual machines based on the response to the attestation request. Also, only one digital signature is necessary for attesting the VMM and the virtual machines.

Particularly, the appraiser may be configured to calculate the second virtual machine integrity value by concatenating the at least part of the collected virtual machine attestation information.

In an implementation form of the appraiser, the received virtual machine attestation information comprise a virtual memory register value for at least one virtual machine, the virtual memory register value including at least one virtual machine measurement of the virtual machine, and the appraiser is configured to calculate the second virtual machine integrity value on the basis of the virtual memory register value(s).

In an implementation form of the appraiser, the virtual machine attestation information further includes a virtual machine measurement report for at least one virtual machine,
the virtual machine measurement report including at least one virtual machine measurement of the corresponding virtual machine, and
the virtual memory register value includes at least one virtual machine measurement of the associated virtual machine in that the virtual memory register value is a concatenation of the at least one virtual machine measurement included in the virtual machine measurement report,
wherein the appraiser is configured to attest the virtual machines on the basis of the virtual memory register value and the virtual machine measurement report of each virtual machine.

In an implementation form of the appraiser, the attestation request comprises a nonce, wherein the appraiser is configured to calculate the second virtual machine integrity value based on at least part of the received virtual machine attestation information and on the nonce. Thereby, the appraiser can verify the freshness of the received virtual machine attestation information.

A fourth aspect of the present invention provides a method for remote attestation of a target device comprising a Virtual Machine Manager, VMM, running one or more virtual machines,
the method comprising:

- sending an attestation request to the target device,
- receiving from the target device a response to the attestation request comprising a digital signature for the VVM and virtual machine attestation information about the one or more virtual machines,
- obtaining a first virtual machine integrity value from the digital signature,
- calculating a second virtual machine integrity value based on at least part of the received virtual machine attestation information, and
- verifying the integrity of the received virtual machine attestation information depending on a comparison of the first and second virtual machine integrity values
- obtaining a memory register value from the digital signature, the memory register value (PCR) storing at least one measurement of the VMM,

wherein the received response to the attestation request comprises a VMM measurement report, the VMM measurement report comprising at least one VMM measurement, and
wherein the appraiser is configured to attest the VMM on the basis of the memory register value and the VMM measurement report.

Further features or implementations of the method according to the fourth aspect of the invention may perform the functionality of the appraiser according to the third aspect of the invention and its different implementation forms.

The method according to the fourth aspect of the invention or any of its implementation forms may be performed by a processor or a computer.

A fifth aspect of the present invention provides a system comprising a target device according to the first aspect and an appraiser according to the third aspect.

A sixth aspect of the present invention provides a computer program having a program code for performing a method according to the second or fourth aspect of the invention when the computer program runs on a computing device.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by eternal entities not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above aspects and implementation forms of the present invention will be explained in the following description of specific embodiments in relation to the enclosed drawings, in which

Fig. 1 shows internal components of a Trusted Platform Module according to the prior art.

Fig. 2 shows a Trusted Boot scheme according to the prior art.

Fig. 3 shows a separate hypervisor and VM attestation according to the prior art.

Fig. 4 shows a Deep Attestation Method according to the prior art.

Fig. 5 shows an appraiser and target for a hypervisor-based attestation according to an embodiment of the present invention.

Fig. 6 shows a method for a hypervisor-based attestation according to an embodiment of the present invention.

Fig. 7 shows a method for collecting attestation data about virtual machines according to an embodiment of the present invention.

Fig. 8 shows a method for collecting attestation data about virtual machines according to a further embodiment of the present invention.

Fig. 9 shows a particular method for collecting attestation data about virtual machines according to the further embodiment of the present invention.

DETAILED DESCRIPTION OF EMBODIMENTS

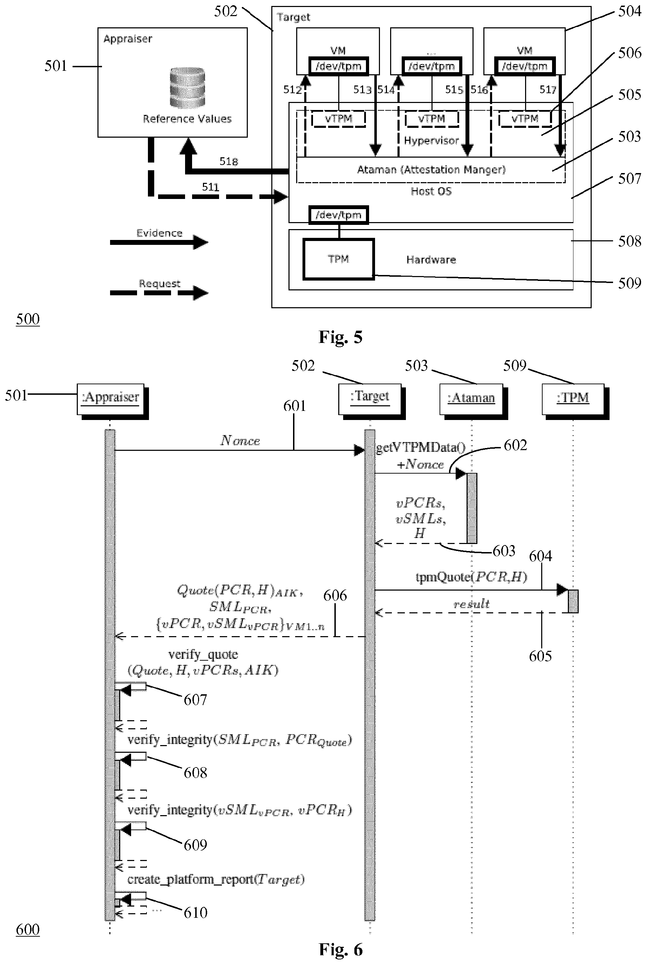

Fig. 5 shows an appraiser and target for a hypervisor-based attestation according to an embodiment of the present invention.

The system 500 shown in Fig. 5 comprises an appraiser 501 and a target device 502.

For the sake of simplicity and for ease of explanation figure 5 illustrates a system comprising an appraiser and a target device. However, this choice is motivated to better explain the interaction between the target device and the appraiser and is not intended to limit the description below only to a system comprising an appraiser and a target device. It is clear that the present invention relates also to a target device and to an appraiser as independent devices as well as to systems comprising more than one target device and more than one appraiser.

The target device may be a client device, such as a user device or may be a server device which is configured to be authenticated or verify by a higher order server. The appraiser may be a server configured to authenticate a client device as defined above as well as lower order servers.

The target device 502 is configured to be attested by the appraiser 501 by remote attestation. The target device 502 comprises a Virtual Machine Manager, VMM, or hypervisor 505 running one or more virtual machines 504. The target device 502 is configured to:

- receive from the appraiser an attestation request,
- collect virtual machine attestation information vPCR, vSML about the one or more virtual machines,
- generate a virtual machine integrity value H based on at least part of the collected virtual machine attestation information vPCR,
- generate a digital signature Quote(PCR, H)$_{AIK}$ for the VVM 505 based on the virtual machine integrity value H, and
- send the generated digital signature Quote(PCR, H)$_{AIK}$ and the virtual machine attestation information vPCR, vSML to the appraiser 501 as a response to the attestation request, so that the appraiser 501 is able to attest the VMM 505 and the one or more virtual machines 504 based on the response to the attestation request.

Each virtual machine 504 may be associated with a virtual security module 506 and a corresponding virtual memory register value vPCR. The virtual security module may be a process running on the Host OS and more precisely on the hypervisor or Virtual Machine Manager. Alternatively, the virtual security module may be a process on a dedicated virtual machine running on the Host OS. In a yet another alternative realization, the virtual security module may be implemented as hardware. The virtual memory register value vPCR includes at least one virtual machine measurement of the associated virtual machine 504. The virtual machine integrity value H is calculated on the basis of the at least one virtual memory register value vPCR. The virtual machine attestation information comprises the virtual memory register value vPCR of at least one virtual machine 504 running on the system.

The virtual machine attestation information further includes a virtual machine measurement report for at least one virtual machine. The virtual machine measurement report includes at least one virtual machine measurement of the corresponding virtual machine and may be for instance a log file implemented as SML. The virtual memory register value vPCR includes at least one virtual machine measurement of the associated virtual machine 504 in that the virtual memory register value vPCR is a concatenation of the at least one virtual machine measurement included in the virtual machine measurement report vSML.

The virtual memory register is preferably a virtual Platform Configuration Register, vPCR, for the virtual machine 504, i.e. a cryptographic hash of the virtual machine measurements. The virtual machine measurement report may be in the form of a virtual Stored Measurement Log (vSML). For the sake of simplicity and for ease of explanation the figures relating to the devices and methods of the invention describe examples where the virtual security module 506 is implemented as a virtual Trusted Platform Module (vTPM). However, it has to be clear that any other module capable of implementing security functions comparable or equivalent to those of a TPM may as well be used without departing from the scope of the present invention.

The target device 502 further comprises a security module 509 configured to generate the digital signature Quote(PCR, H)$_{AIK}$ for the VMM 505. The digital signature Quote(PCR, H)$_{AIK}$ is generated based on the virtual machine integrity value H and on a memory register value corresponding to the security module 509, the memory register value including at least one measurement of the VMM 505.

The target device 502 is further configured to generate a VMM measurement report, the VMM measurement report comprising at least one VMM measurement, and send the VMM measurement report to the appraiser 501 along with the generated digital signature and the virtual machine attestation information.

As for the virtual security module, the security module 509 may be implemented as a Trusted Platform Module (TPM), with a Platform Configuration Register (PCR) or memory register for storing measurements of the VMM 505. As explained above, also in this case any other security module capable of implementing security functions comparable or equivalent to those of a TPM may as well be used without departing from the scope of the present invention. The TPM 509 may located in hardware 508 of the target 502. For instance, the security module by be implemented as a TPM chip in the target device. Alternatively, the TPM may also be implemented as a software module. The VMM measurement report may be in the form of a Stored Measurement Log (SML). The memory register is preferably a PCR for the VMM 505, wherein the PCR stores a concatenation of the measurement values of VMM. The concatenation of the measurement values can be obtained by calculating an Extend function, such as a cryptographic hash of the VMM measurements.

For the sake of simplicity, in the examples and embodiments described in this document reference is made to SML and vSML. SML and vSML are examples for implementing the VMM measurement report and the virtual memory measurement report. SML and vSML are possible implementations of a log of measurements of the VMM 505 and of the virtual machine 504 respectively. Any other realization of such measurement reports or logs may be used instead.

The target 502 also comprises an attestation manager 503. The attestation manager 503 and the VMM or hypervisor 505 are located in a Host OS 507 of the target 502. Preferably, the attestation manager 503 may be part of the VMM 505.

In Fig. 5, arrow 511 illustrates the appraiser 501 sending an attestation request to the target 502. Arrows 512, 514, 516 show the attestation manager 503 requesting attestation data from each virtual machine 504, and arrows 513, 515, 517 show the respective virtual machine 504 sending to the attestation manager 503 the respective evidence, i.e. attestation data, in form of for example the vPCR and the vSML of the virtual machine 504.

In the hypervisor-based attestation of Fig. 5, the appraiser 501 attests the target 502 including n-VMs 504. The attestation manager 503, also referred to as "Ataman", which is a process in the Host OS 507 or hypervisor 505, collects individual evidence or attestation data from the VMs 504. Alternatively the attestation manager may be implemented as a hardware module. Subsequently, the target 502 sends a response containing its own evidence and each VMs evidence.

The hypervisor-based attestation of the present invention, in contrast to other solutions, does not contact and attest VMs directly. Instead, attestation of the VMs is performed through the hypervisor or Virtual Machine Manager residing in the Host OS. Specifically, the appraiser is configured to contact the hypervisor / Host OS and receives a bulk of VM attestation attached to a single physical TPM attestation.

A first aspect of the hypervisor-based attestation according to the present invention is a bottom-up attestation. This means that the present invention proposes an attestation mechanism that is based on the hypervisor. The appraiser sends a request to the target, the target subsequently collects VM evidence via the attestation manager and attaches it to its own attestation data in a response to the appraiser. The target own attestation data may include, for instance, a measurement report comprising measurements done by the security module of the target device, and the PCR or memory register values corresponding to the memory registers storing said measurements. This attestation method allows for a reduced use of TPM quotes and is advantageous over known attestation methods which either attest VMs and hypervisors separately or attest hypervisors implicitly by means of cryptographic binding of a VMs underlying platform state to its credentials (eAIK).

A further aspect of the hypervisor-based attestation according to the present invention is a bulk VM measurement. This is done by the attestation manager, which is responsible for collecting individual vPCRs and vSMLs of VMs and creating the data structure that is finally attached to a single hypervisor attestation.

A further aspect of the hypervisor-based attestation according to the present invention is an on-block evaluation. The appraiser receives the hypervisor / host OS attestation with the VM attestation data (evidence) attached to it. The appraiser can now verify the hypervisor / Host OS using stored reference values, and may subsequently use the same verification process for attached VM evidence. The only addition to common evaluation mechanism is required to validate the integrity, freshness, and authenticity of attached VM data.

The proposed attestation method of the present invention is not only highly scalable towards Cloud environments but also significantly less expensive for an appraiser in terms of protocol overhead for attesting individual VMs and evaluation of each vTPM Quote and associated TPM Quote.

The hypervisor-based attestation of the present invention is an approach that is based on the conclusion that for a VM attestation there has to be a hypervisor attestation as well. Contrary to existing approaches, the present invention proposes a bottom-up instead of a top-down attestation. This means that the attestation scheme of the present invention attests VMs through their hypervisor instead of attesting hypervisors indirectly or directly through VMs. The bottom-up design makes full use of the private cloud and NFV scenarios that typically have only one owner attesting VMs and hypervisors.

Fig. 6 shows a method 600 for a hypervisor-based attestation according to an embodiment of the present invention.

The proposed remote attestation protocol of the present invention is illustrated in Fig. 6. Said Fig. 6 shows interaction and protocol steps for the main components of the hypervisor- based attestation, comprising the two parties that are the appraiser 501 and the target 502 with its internal component the attestation manager 503, although the architecture could be extended by adding a Trusted Third Party (TTP). The TTP could be used to manage key exchanges between appraiser and target platform to fulfill privacy, confidentiality, and authenticity requirements. The attestation scheme of the present invention requires that the targets identity credential, i.e. the private portion of its AIK, is known to the appraiser.

The method 600 comprises the following steps.

In a first step 601, the appraiser 501 sends a Nonce to the target 502 it wants to attest. The nonce may be part of a defined attestation request. Defining a request is specific to the deployment scenario and out of scope.

In a second step 602, upon reception of the Nonce, the target 502 contacts the local attestation manager 503, also referred to in Fig. 6 as "Ataman", that is the mechanism responsible for collecting data from VMs running on the platform.

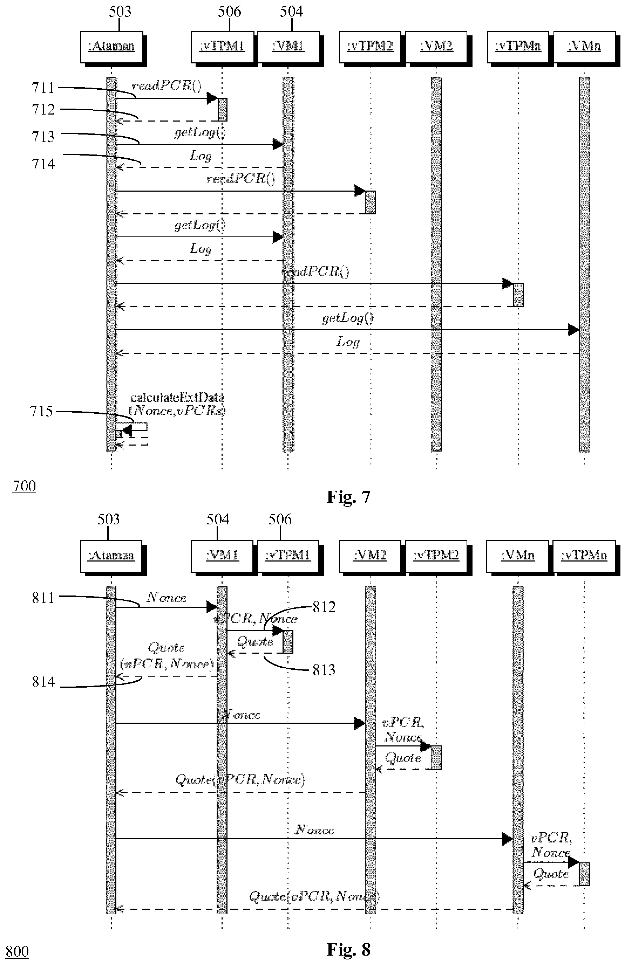

An embodiment for collecting evidence about virtual machines is shown in Fig. 7, while a further embodiment will be shown together with Figs. 8-9.

Fig. 7 particularly shows the interaction between the attestation manager or Ataman 503, and each vTPM 506 and each VM 504. This example describes a direct access approach, where the attestation manager does not contact the VMs 504 to gather PCR values. Instead the PCR values can be pulled or retrieved from the vTPM process running in the host OS and in particular at the hypervisor level. Correspondingly, the attestation manager reads 711, 712 the vPCR of each vTPM 506, and after a request 713 receives 714 the virtual machine log vSML stored in each virtual machine 504.

Once the attestation manager 503 has collected all PCRs and SMLs of the VMs, i.e. all vPCRs and vSMLs, individual vTPM vPCRs are concatenated in a step 715 using the following mechanism:

$$vPcr_{m_i} := SHA1(vPcr_{m_{i-1}} \| m_i) \qquad (1a)$$

$$vPcr_{m_{i+1}} := SHA1(vPcr_{m_i} \| m_{i+1}) \qquad (1b)$$

Thereafter, the attestation manager creates the integrity value H over all collected vPCRs. The supplied Nonce serves as the initial value. However, it could be placed at any position within the hash chain. The concatenation of Nonce and vTPM PCRs values is referenced as integrity value H.

The SHA1 function of the above equations (1a) and (1b) may be a hash function. The concatenation is then carried out for example by computing a cumulative hash. Alternatively, any other type of secure compression may be used for generating the integrity value H.

Back to figure 6 in a next step 603, the attestation manager 503 passes the following data back to the Target 502: *ExternalData = H* as well as the tuple {*vPCR, vSML_{vPCR}*} for each VM, wherein *ExternalData* corresponds to the digital signature H.

In steps 604, 605, the target 502 gathers data for its own attestation, i.e. for the hypervisor 503, using the TPM Quote command with *ExternalData* supplied by the attestation manager. The target 502 gathers said data from the TPM 509. The TPM 509 returns 605 the result of the quote function. The quote function may be implemented in hardware and in particular on the hardware implemented TPM. Alternatively, if the TPM is implemented as a software module, the quote may be also implemented as software module. The TPM receives from the target 502 the PCR number and the integrity value H. The quote function carried out by the TPM takes the PCR number and the integrity value H and digitally signs the PCR values, $PCR_v$ (stored in the PCR identified by the the PCR number) and the integrity value. The result $Quote(PCR_v, H)_{AIK}$ transmitted 605 from the TPM to the target comprises the digitally signed PCR and the digitally signed H.

Based on the PCR values, the TPM indeed provides the sealing functionality, i.e. binding encrypted data to the recorded configuration, and attestation, i.e. reporting the system state to a remote party. The latter uses the function TPM_Quote, which presents the recorded PCR values signed by an Attestation Identity Key (AIK) of the TPM. The AIK plays the role of a pseudonym of the TPM's identity for privacy reasons. To be authentic the AIK is preferably certified by a trusted third party. The quote is a digital signature of the PCR.

Regarding PCR and PCR value, it has to be noted that whenever PCR is used in a request, we actually request the value of a specific register or a set of registers by their number (PRC no, PCR number) while the response will contain the value of the specific PCR number, i.e. will contain the PCR value.

In a next step 606, the following information is now sent back to the appraiser 501:

- TPM Quote, including the requested PCR using the integrity value H as external data
- the virtual machine measurement report or log, e.g. vSML, as well as
- the tuple {$vPCR$, $vSML_{vPCR}$} for each VM.

In a next step 607, the appraiser 501 verifies the authenticity of the supplied TPM Quote using the Targets $AIK_{pub}$. This key $AIK_{pub}$ is a public key corresponding to the AIK key used for signing the PCR values. If the authenticity verification is successful, the appraiser evaluates the supplied external data H. In other words, the integrity value H is checked by means of the public key.

Once the appraiser has successfully recalculated H using his Nonce and the supplied vPCRs it can evaluate the target platform using PCR and log (SML).

Then, the appraiser 501 uses in steps 608 and 609 the supplied logs, e.g. SML and vSMLs, to recalculate PCR and vPCRs while checking the contents of the log.

The hypervisor-based attestation is not bound to any specific logging mechanism, however, IMA as a measurement architecture along with SML as the log may be a possible implementation. The following embodiments are based on IMA, however IMA is only an example of Measurement Architecture and other types of Measurement Architecture may be used instead of IMA.

In a next step 610, the appraiser 501 may then attest the target platform and VMs running on top of it.

Based on the supplied information, the appraiser may verify the target using the Nonce as evidence for freshness and $SML_{PCR}$ along with PCR from the Quote to verify its platform configuration. Through the addition of both vTPM PCRs and individual VM SMLs, the appraiser can apply the same process for VM verifications. Furthermore, the appraiser can verify the integrity and freshness of supplied vTPM PCR's and SML's using the accumulated hash value H and Nonce contained in the received Quote. Also, the attestation mechanism of the present invention could be used to transport any additional logging data along with PCR values - SML as part of IMA is just a specific implementation of such a log.

Variations of this scheme become necessary as soon as the accessibility of the vTPM changes. In the embodiment of Fig. 7, the attestation manager can access vTPM data and thus PCRs directly via a process interface or file access to the stored measurements. However, hardening and increased isolation of vTPMs enhance data protection but lead to changes in accessing of vTPM data.

A variation of the proposed protocol assumes means of communication, referred to as channels, which exist exclusively between a hypervisor and a VM. These channels implicitly guarantee that only a VMs underlying platform can communicate through it which makes authentication between the two communicating parties unnecessary. However, since the attestation manager can no longer directly access vTPM data, it has to contact the VM directly.

A practical realization of these channels are Virt I/O interfaces provided by KVM, sockets, or authenticated TCP/IP interfaces, see e.g. http://www.linux-kvm.org/page/Virtio.

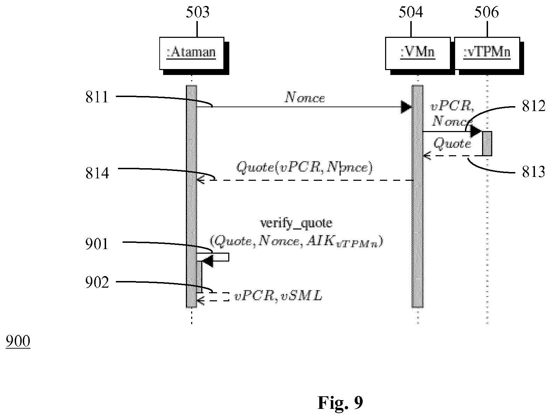

In this respect, Fig. 8 shows a method for collecting evidence about virtual machines according to a further embodiment of the present invention, while Fig. 9 shows a particular method for collecting evidence about virtual machines according to the further embodiment of the present invention.

The basic attestation protocol from the appraiser to the target in Fig. 6 remains unchanged, however, the protocol between the attestation manager and VMs changes significantly.

Fig. 8 particularly shows the interaction between attestation manager, VMs, and vTPMs. The attestation manager contacts VMs requesting SMLs and vTPM Quotes instead of accessing the vTPM directly.

This changes the set of information that the attestation manager holds after receiving responses from each VM to

$$VmEvidence :=$$

$$Nonce,$$

$$\{\{Quote_{vTPM1}, vPCR_{vTPM1}, SML_{vTPM1}\}, ..., \{Quote_{vTPMn}, vPCR_{vTPMn}, SML_{vTPMn}\}\}$$

which effectively means that the attestation manager collects individual attestations from each VM in the same way the appraiser does for the hypervisor.

There are two strategies for handling this information. One approach would be creating H:= *SHA1(VmEvidence||Nonce)*, using H as external data in the TPM_Quote, and attaching the collected VmEvidence as proposed in the original scheme above. This approach would mean that the appraiser has to verify the TPM_Quote as well as the individual vTPM_Quotes in addition to their vPCRs and vSMLs. Consequently, an appraiser would be verifying individual VM attestations using the same process as for the hypervisor attestation to which they are attached. Consequently, this means that AIKs used by vTPMs have to be known to the appraiser, which might create unwanted overhead.

An alternative approach would require the attestation manager to verify whether supplied vPCRs are both fresh and authentic, i.e. the attestation manager verifies the vTPM_Quotes over vPCRs and external Data, i.e. the supplied Nonce. This alternative process is depicted in Fig. 9 that shows the interaction between attestation manager, VMs, and vTPMs. The attestation manager contacts VMs requesting SMLs and vTPM Quotes, verifies them, and collects vPCRs and vSMLs.

As a result, the data structure and information sent from the target platform to the appraiser matches the original scheme since vTPM_Quotes are already verified and excluded from the attached data. Thus, an appraiser does not need to have knowledge about vTPM AIKs while still being able to attest the target platform as well as VMs running on top of it.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

List of abbreviations:

| | |
|---|---|
| AIK | Attestation Identity Key |
| AM | Anti-Malware |
| CRTM | Core Root of Trust for Measurement |
| eAIK | Ephemeral Attestation Identity Key |
| IMA | Integrity Measurement Architecture |
| NFV | Network Function Virtualization |
| OS | Operating System |
| PCR | Platform Configuration Register |
| RA | Remote Attestation |
| SML | Stored Measurement Log |
| TCG | Trusted Computing Group |
| TPM | Trusted Platform Module |
| TTP | Trusted Third Party |
| VM | Virtual Machines |
| VMM | Virtual Machine Monitor |
| vTPM | Virtual Trusted Platform Module |
| vSML | Virtual Stored Measurement Log |

**Claims**

1. Target device configured to be attested by an appraiser (501) by remote attestation,
   the target device (502) comprising a Virtual Machine Manager, VMM, (505) running one or more virtual machines (504), and being configured to:

   - receive (601) from the appraiser (501) an attestation request,
   - collect (602, 603) virtual machine attestation information (vPCR, vSML) about the one or more virtual machines (504),
   - generate a virtual machine integrity value (H) by concatenating at least part of the collected virtual machine attestation information (vPCR),
   - generate a digital signature (Quote(PCR, H)$_{AIK}$) for the VVM (505) based on the virtual machine integrity value (H), and
   - send (606) the generated digital signature (Quote(PCR, H)$_{AIK}$) and the virtual machine attestation information (vPCR, vSML) to the appraiser (501) as a response to the attestation request,
   wherein the target device further comprises
   - a security module (509, TPM) configured to generate the digital signature (Quote(PCR, H)$_{AIK}$) for the VMM (505),

   wherein the digital signature (Quote(PCR, H)$_{AIK}$) is generated based on the virtual machine integrity value (H) and on a memory register value (PCR) corresponding to the security module (509), the memory register value (PCR) including at least one measurement of the VMM (505)
wherein the target device is further configured to:

- generate a VMM measurement report (SML), the VMM measurement report comprising at least one VMM measurement, and
- send (606) the VMM measurement report (SML) to the appraiser (501) along with the generated digital signature $(Quote(PCR, H)_{AIK})$ and the virtual machine attestation information (vPCR, vSML).

2. Target device according to claim 1,
wherein each virtual machine (504) is associated with a virtual security module (506) and a corresponding virtual memory register value (vPCR), the virtual memory register value (vPCR) including at least one virtual machine measurement of the associated virtual machine (504), and
wherein the virtual machine integrity value (H) is calculated on the basis of the at least one virtual memory register value (vPCR).

3. Target device (502) according to claim 2,
wherein the virtual machine attestation information further includes a virtual machine measurement report (vSML) for each virtual machine, the virtual machine measurement report (vSML) including at least one virtual machine measurement of the corresponding virtual machine, and
the virtual memory register value (vPCR) includes at least one virtual machine measurement of the associated virtual machine (504) in that the virtual memory register value (vPCR) is a concatenation of the at least one virtual machine measurement included in the virtual machine measurement report (vSML).

4. Target device according to any of the preceding claims,
comprising:

- an attestation manager (503) configured to compute (715) the virtual machine integrity value (H) by concatenating the virtual memory register value (vPCR) at least one virtual machine (504),

wherein:

- the security module (509, TPM) is configured to receive as input the virtual machine integrity value and generate the digital signature $(Quote(PCR, H)_{AIK})$ by means of a private key (AIK).

5. Target device according to claim 3 or 4,
the target device being configured to collect the virtual machine attestation information (vPCR, vSML) of at least one virtual machine by:

- reading (711, 712) the virtual memory register value (vPCR) of the virtual security module (506) corresponding to the least one virtual machine, and
- receiving (714) the virtual machine measurement report (vSML) stored in the least one virtual machine (504).

6. Target device according to any of the claims 3 to 5,
wherein the attestation request received from the appraiser (501) comprises a nonce, the target device being configured to:

- generate the virtual machine integrity value (H) based on the at least part of the collected virtual machine attestation information (vPCR) and on the nonce.

7. Method for responding to an attestation request received by a target device (502) from an appraiser (501) for remote attestation of the target device (502),
the target device (502) comprising a Virtual Machine Manager, VMM, (505) running one or more virtual machines (504), and
wherein the target device

- receives (601) from the appraiser (501) the attestation request,
- collects (602, 603) virtual machine attestation information (vPCR, vSML) about the one or more virtual machines (504),
- generates a virtual machine integrity value (H) by concatenating at least part of the collected virtual machine attestation information (vPCR),
- generates, at a security module (509, TPM), a digital signature (Quote(PCR, H)$_{AIK}$) for the VVM (505) based on the virtual machine integrity value (H), and
- sends (606) the generated digital signature (Quote(PCR, H)$_{AIK}$) and the virtual machine attestation information (vPCR, vSML) to the appraiser (501) as a response to the attestation request,
wherein the digital signature (Quote(PCR, H)$_{AIK}$) is generated based on the virtual machine integrity value (H) and on a memory register value (PCR) corresponding to the security module (509), the memory register value (PCR) including at least one measurement of the VMM (505),
wherein the target device further
- generates a VMM measurement report (SML), the VMM measurement report comprising at least one VMM measurement, and
- sends (606) the VMM measurement report (SML) to the appraiser (501) along with the generated digital signature (Quote(PCR,H)$_{AIK}$) and the virtual machine attestation information (vPCR, vSML).

8. Appraiser for remote attestation of a target device (502) comprising a Virtual Machine Manager, VMM, (505) running one or more virtual machines (504),
the appraiser (501) being configured to:

- send (601) an attestation request to the target device (502),
- receive (606) from the target device (502) a response to the attestation request comprising a digital signature (Quote(PCR, H)$_{AIK}$) for the VVM (505) and virtual machine attestation information (vPCR, vSML) about the one or more virtual machines (504),
- obtain a first virtual machine integrity value (H) from the digital signature (Quote(PCR, H)$_{AIK}$),
- calculate a second virtual machine integrity value (H) by concatenating at least part of the received virtual machine attestation information (vPCR), and
- verify the integrity of the received virtual machine attestation information (vPCR, vSML) depending on a comparison of the first and second virtual machine integrity values (H),
- obtain a memory register value (PCR) from the digital signature (Quote(PCR, H)$_{AIK}$), the memory register value (PCR) storing at least one measurement of the VMM (505),

wherein the received response to the attestation request comprises a VMM measurement report (SML), the VMM measurement report comprising at least one VMM measurement, and
wherein the appraiser is configured to attest the VMM on the basis of the memory register value (PCR) and the VMM measurement report (SML).

9. Appraiser according to claim 8,
wherein the received virtual machine attestation information (vPCR, vSML) comprises a virtual memory register value (vPCR) for at least one virtual machine (504), the virtual memory register value (vPCR) including at least one virtual machine measurement of the virtual machine (504), and
wherein the appraiser is configured to calculate the second virtual machine integrity value (H) on the basis of the virtual memory register value(s) (vPCR).

10. Appraiser according to claim 9,
wherein the virtual machine attestation information further includes a virtual machine measurement report (vSML) for at least one virtual machine, the virtual machine measurement report (vSML) including at least one virtual machine measurement of the corresponding virtual machine, and
the virtual memory register value (vPCR) includes at least one virtual machine measurement of the associated virtual machine (504) in that the virtual memory register value (vPCR) is a concatenation of the at least one virtual machine measurement included in the virtual machine measurement report (vSML),
wherein the appraiser is configured to attest the virtual machines (504) on the basis of the virtual memory register value (vPCR) and the virtual machine measurement report (vSML) of each virtual machine.

11. Appraiser according to any of the claims 8 to 10,
wherein the attestation request comprises a nonce,
wherein the appraiser is configured to calculate the second virtual machine integrity value (H) based on at least part of the received virtual machine attestation information (vPCR) and on the nonce.

**12.** Method for remote attestation of a target device (502) comprising a Virtual Machine Manager, VMM, (505) running one or more virtual machines (504), the method comprising:

- sending (601) an attestation request to the target device (502),
- receiving (606) from the target device (502) a response to the attestation request comprising a digital signature (Quote(PCR, H)$_{AIK}$) for the VVM (505) and virtual machine attestation information (vPCR, vSML) about the one or more virtual machines (504),
- obtaining a first virtual machine integrity value (H) from the digital signature (Quote(PCR, H)$_{AIK}$),
- calculating a second virtual machine integrity value (H) by concatenating at least part of the received virtual machine attestation information (vPCR), and
- verifying the integrity of the received virtual machine attestation information (vPCR, vSML) depending on a comparison of the first and second virtual machine integrity values (H)
- obtaining a memory register value (PCR) from the digital signature (Quote(PCR, H)$_{AIK}$), the memory register value (PCR) storing at least one measurement of the VMM (505),

wherein the received response to the attestation request comprises a VMM measurement report (SML), the VMM measurement report comprising at least one VMM measurement, and
wherein the appraiser is configured to attest the VMM on the basis of the memory register value (PCR) and the VMM measurement report (SML).

**13.** System comprising a target device (502) according to any of the claims 1 to 6, and an appraiser (501) according to any of the claims 8 to 11.

**14.** Computer program having a program code for performing the method according to any of the claims 7 and 12, when the computer program runs on a computing device.

**Patentansprüche**

**1.** Zielvorrichtung, die dafür ausgelegt ist, von einer Einheit zur Bestätigung der Nutzerintegrität ("Appraiser") (501) per Fern-Integritätsbestätigung ("Remote Attestation") bestätigt zu werden,
wobei die Zielvorrichtung (502) einen Verwalter virtueller Maschinen ("Virtual Machine Manager"), VMM, (505) umfasst, die auf einer oder mehreren virtuellen Maschinen (504) läuft und dafür ausgelegt ist:

- vom "Appraiser" (501) eine Integritätsbestätigungsanforderung zu empfangen (601),
- Integritätsbestätigungsinformationen für virtuelle Maschinen (vPCR, vSML) über die ein oder mehreren virtuellen Maschinen (504) zu erfassen (602, 603),
- einen Integritätswert für virtuelle Maschinen (H) zu erzeugen, indem wenigstens ein Teil der erfassten Integritätsbestätigungsinformationen für virtuelle Maschinen (vPCR) verkettet wird,
- eine digitale Signatur (Quote(PCR, H)$_{AIK}$) für den VVM (505) basierend auf dem Integritätswert für virtuelle Maschinen (H) zu erzeugen und
- die erzeugte digitale Signatur (Quote(PCR, H)$_{AIK}$) und die Integritätsbestätigungsinformationen für virtuelle Maschinen (vPCR, vSML) an den "Appraiser" (501) zu senden, als Reaktion auf die Integritätsbestätigungsanforderung, wobei die Zielvorrichtung ferner umfasst:
- ein Sicherheitsmodul (509, TPM), das dafür ausgelegt ist, die digitale Signatur (Quote(PCR, H)$_{AIK}$) für den VMM (505) zu erzeugen,

wobei die digitale Signatur (Quote(PCR, H)$_{AIK}$) basierend auf dem Integritätswert für virtuelle Maschinen (H) und auf einem Speicherregisterwert (PCR), der dem Sicherheitsmodul (509) entspricht, erzeugt wird, wobei der Speicherregisterwert (PCR) wenigstens eine Messung des VMM (505) aufweist,
wobei die Zielvorrichtung ferner dafür ausgelegt ist:

- einen VMM-Messbericht (SML) zu erzeugen, wobei der VMM-Messbericht wenigstens eine VMM-Messung umfasst, und
- den VMM-Messbericht (SML) an den "Appraiser" (501) zu senden (606), zusammen mit der erzeugten digitalen Signatur (Quote(PCR, H)$_{AIK}$) und den Integritätsbestätigungsinformationen für virtuelle Maschinen (vPCR, vSML).

**2.** Zielvorrichtung gemäß Anspruch 1,
wobei jede virtuelle Maschine (504) mit einem virtuellen Sicherheitsmodul (506) und einem entsprechenden virtuellen Speicherregisterwert (vPCR) verknüpft ist, wobei der virtuelle Speicherregisterwert (vPCR) wenigstens eine virtuelle Maschinenmessung der zugehörigen virtuellen Maschine (504) aufweist, und
wobei der Integritätswert für virtuelle Maschinen (H) auf Basis des wenigstens einen virtuellen Speicherregisterwertes (vPCR) berechnet wird.

**3.** Zielvorrichtung (502) gemäß Anspruch 2,
wobei die Integritätsbestätigungsinformationen für virtuelle Maschinen ferner einen Messbericht für virtuelle Maschinen (vSML) für jede virtuelle Maschine aufweisen, wobei der Messbericht für virtuelle Maschinen (vSML) wenigstens eine virtuelle Maschinenmessung der entsprechenden virtuellen Maschine aufweist, und wobei der virtuelle Speicherregisterwert (vPCR) wenigstens eine virtuelle Maschinenmessung der zugehörigen virtuellen Maschine (504) aufweist, dahingehend, dass der virtuelle Speicherregisterwert (vPCR) eine Verkettung der wenigstens einen virtuellen Maschinenmessung im Messbericht für virtuelle Maschinen (vSML) ist.

**4.** Zielvorrichtung gemäß einem der vorstehenden Ansprüche,
umfassend:

- eine Komponente zur Verwaltung von Integritätsbestätigungen ("Attestation Manager") (503), die dafür ausgelegt ist, den Integritätswert für virtuelle Maschinen (H) zu berechnen (715), indem der virtuelle Speicherregisterwert (vPCR) wenigstens einer virtuellen Maschine (504) verkettet wird,

wobei:

- das Sicherheitsmodul (509, TPM) dafür ausgelegt ist, als Eingang den Integritätswert für virtuelle Maschinen zu empfangen und die digitale Signatur *(Quote(PCR, H)$_{AIK}$)* mithilfe eines privaten Schlüssels (AIK) zu erzeugen.

**5.** Zielvorrichtung gemäß Anspruch 3 oder 4,
wobei die Zielvorrichtung dafür ausgelegt ist, die Integritätsbestätigungsinformationen für virtuelle Maschinen (vPCR, vSML) von wenigstens einer virtuellen Maschine zu erfassen, indem:

- der virtuelle Speicherregisterwert (vPCR) des virtuellen Sicherheitsmoduls (506), der der wenigstens einen virtuellen Maschine entspricht, ausgelesen wird (711, 712), und
- der Messbericht für virtuelle Maschinen (vSML), der in der wenigstens einen virtuellen Maschine (504) gespeichert ist, empfangen wird (714).

**6.** Zielvorrichtung gemäß einem der Ansprüche 3 bis 5,
wobei die vom "Appraiser" (501) empfangene Integritätsbestätigungsanforderung einen Einmalwert ("Nonce") umfasst, wobei die Zielvorrichtung dafür ausgelegt ist:

- den Integritätswert für virtuelle Maschinen (H) basierend auf wenigstens dem Teil der erfassten Integritätsbestätigungsinformationen für virtuelle Maschinen (vPCR) und dem Einmalwert zu erzeugen.

**7.** Verfahren zum Antworten auf eine Integritätsbestätigungsanforderung, die durch eine Zielvorrichtung (502) von einem "Appraiser" (501) empfangen wird, zur Fern-Integritätsbestätigung ("Remote Attestation") der Zielvorrichtung (502),
wobei die Zielvorrichtung (502) einen "Virtual Machine Manager", VMM, (505) umfasst, der auf einer oder mehreren virtuellen Maschinen (504) läuft, und
wobei die Zielvorrichtung

- vom "Appraiser" (501) die Integritätsbestätigungsanforderung empfängt (601),
- Integritätsbestätigungsinformationen für virtuelle Maschinen (vPCR, vSML) über die ein oder mehreren virtuellen Maschinen (504) erfasst (602, 603),
- einen Integritätswert für virtuelle Maschinen (H) erzeugt, indem wenigstens ein Teil der erfassten Integritätsbestätigungsinformationen für virtuelle Maschinen (vPCR) verkettet wird,
- an einem Sicherheitsmodul (509, TPM) eine digitale Signatur (Quote(PCR, H)$_{AIK}$) für den VVM (505) basierend auf dem Integritätswert für virtuelle Maschinen (H) erzeugt und
- die erzeugte digitale Signatur (Quote(PCR, H)$_{AIK}$) und die Integritätsbestätigungsinformationen für virtuelle Maschinen (vPCR, vSML) an den "Appraiser" (501) sendet (606), als Reaktion auf die Integritätsbestätigungsanforderung,

wobei die digitale Signatur (Quote(PCR, H)$_{AIK}$) basierend auf dem Integritätswert für virtuelle Maschinen (H) und auf einem Speicherregisterwert (PCR), der dem Sicherheitsmodul (509) entspricht, erzeugt wird, wobei der Speicherregisterwert (PCR) wenigstens eine Messung des VMM (505) aufweist,

wobei die Zielvorrichtung ferner

- einen VMM-Messbericht (SML) erzeugt, wobei der VMM-Messbericht wenigstens eine VMM-Messung umfasst, und

- den VMM-Messbericht (SML) an den "Appraiser" (501) sendet (606), zusammen mit der erzeugten digitalen Signatur (Quote(PCR, H)$_{AIK}$) und den Integritätsbestätigungsinformationen für virtuelle Maschinen (vPCR, vSML).

8.  "Appraiser" für die Fern-Integritätsbestätigung ("Remote Attestation") einer Zielvorrichtung (502), umfassend einen "Virtual Machine Manager", VMM, (505) der auf einer oder mehreren virtuellen Maschinen (504) läuft, wobei der "Appraiser" (501) dafür ausgelegt ist:

    - eine Integritätsbestätigungsanforderung an die Zielvorrichtung (502) zu senden (601),
    - von der Zielvorrichtung (502) eine Antwort auf die Integritätsbestätigungsanforderung zu empfangen (606), die eine digitale Signatur (Quote(PCR, H)$_{AIK}$) für den VVM (505) und Integritätsbestätigungsinformationen für virtuelle Maschinen (vPCR, vSML) über die ein oder mehreren virtuellen Maschinen (504) umfasst,
    - einen ersten Integritätswert für virtuelle Maschinen (H) aus der digitalen Signatur (Quote(PCR, H)$_{AIK}$) zu gewinnen,
    - einen zweiten Integritätswert für virtuelle Maschinen (H) zu berechnen, indem wenigstens ein Teil der empfangenen Integritätsbestätigungsinformationen für virtuelle Maschinen (vPCR) verkettet wird, und
    - die Integrität der empfangenen Integritätsbestätigungsinformationen für virtuelle Maschinen (vPCR, vSML) zu verifizieren, in Abhängigkeit von einem Vergleich des ersten und des zweiten Integritätswertes für virtuelle Maschinen (H),
    - einen Speicherregisterwert (PCR) aus der digitalen Signatur (Quote(PCR, H)$_{AIK}$) zu gewinnen, wobei der Speicherregisterwert (PCR) wenigstens eine Messung des VMM (505) speichert,

    wobei die empfangene Antwort auf die Integritätsbestätigungsanforderung einen VMM-Messbericht (SML) umfasst, wobei der VMM-Messbericht wenigstens eine VMM-Messung umfasst, und

    wobei der "Appraiser" dafür ausgelegt ist, den VMM auf Basis des Speicherregisterwertes (PCR) und des VMM-Messberichts (SML) zu bestätigen.

9.  "Appraiser" gemäß Anspruch 8,
    wobei die empfangenen Integritätsbestätigungsinformationen für virtuelle Maschinen (vPCR, vSML) einen virtuellen Speicherregisterwert (vPCR) für wenigstens eine virtuelle Maschine (504) umfassen, wobei der virtuelle Speicherregisterwert (vPCR) wenigstens eine virtuelle Maschinenmessung der virtuellen Maschine (504) umfasst, und
    wobei der "Appraiser" dafür ausgelegt ist, den zweiten Integritätswert für virtuelle Maschinen (H) auf Basis des/der virtuellen Speicherregisterwerte(s) (vPCR) zu berechnen.

10. "Appraiser" gemäß Anspruch 9,
    wobei die Integritätsbestätigungsinformationen für virtuelle Maschinen ferner einen Messbericht für virtuelle Maschinen (vSML) für wenigstens eine virtuelle Maschine aufweisen, wobei der Messbericht für virtuelle Maschinen (vSML) wenigstens eine virtuelle Maschinenmessung der entsprechenden virtuellen Maschine aufweist, und wobei der virtuelle Speicherregisterwert (vPCR) wenigstens eine virtuelle Maschinenmessung der zugehörigen virtuellen Maschine (504) aufweist, dahingehend, dass der virtuelle Speicherregisterwert (vPCR) eine Verkettung der wenigstens einen virtuellen Maschinenmessung im Messbericht für virtuelle Maschinen (vSML) ist, wobei der "Appraiser" dafür ausgelegt ist, die virtuellen Maschinen (504) auf Basis des virtuellen Speicherregisterwertes (vPCR) und des Messberichts für virtuelle Maschinen (vSML) jeder virtuellen Maschine zu bestätigen.

11. "Appraiser" gemäß einem der Ansprüche 8 bis 10,
    wobei die Integritätsbestätigungsanforderung einen Einmalwert umfasst,
    wobei der "Appraiser" dafür ausgelegt ist, den zweiten Integritätswert für virtuelle Maschinen (H) basierend auf wenigstens einem Teil der empfangenen Integritätsbestätigungsinformationen für virtuelle Maschinen (vPCR) und dem Einmalwert zu berechnen.

**12.** Verfahren für die Fern-Integritätsbestätigung ("Remote Attestation") einer Zielvorrichtung (502), umfassend einen "Virtual Machine Manager", VMM, (505) der auf einer oder mehreren virtuellen Maschinen (504) läuft, wobei das Verfahren umfasst:

- eine Integritätsbestätigungsanforderung an die Zielvorrichtung (502) zu senden (601),
- von der Zielvorrichtung (502) eine Antwort auf die Integritätsbestätigungsanforderung zu empfangen (606), die eine digitale Signatur (Quote(PCR, H)$_{AIK}$) für den VVM (505) und Integritätsbestätigungsinformationen für virtuelle Maschinen (vPCR, vSML) über die ein oder mehreren virtuellen Maschinen (504) umfasst,
- einen ersten Integritätswert für virtuelle Maschinen (H) aus der digitalen Signatur (Quote(PCR, H)$_{AIK}$) zu gewinnen,
- einen zweiten Integritätswert für virtuelle Maschinen (H) zu berechnen, indem wenigstens ein Teil der empfangenen Integritätsbestätigungsinformationen für virtuelle Maschinen (vPCR) verkettet wird, und
- die Integrität der empfangenen Integritätsbestätigungsinformationen für virtuelle Maschinen (vPCR, vSML) zu verifizieren, in Abhängigkeit von einem Vergleich des ersten und des zweiten Integritätswertes für virtuelle Maschinen (H),
- einen Speicherregisterwert (PCR) aus der digitalen Signatur (Quote(PCR, H)$_{AIK}$) zu gewinnen, wobei der Speicherregisterwert (PCR) wenigstens eine Messung des VMM (505) speichert,

wobei die empfangene Antwort auf die Integritätsbestätigungsanforderung einen VMM-Messbericht (SML) umfasst, wobei der VMM-Messbericht wenigstens eine VMM-Messung umfasst, und wobei der "Appraiser" dafür ausgelegt ist, den VMM auf Basis des Speicherregisterwertes (PCR) und des VMM-Messberichts (SML) zu bestätigen.

**13.** System, das eine Zielvorrichtung (502) gemäß einem der Ansprüche 1 bis 6 und einen "Appraiser" (501) gemäß einem der Ansprüche 8 bis 11 umfasst.

**14.** Computerprogramm mit einem Programmcode zum Durchführen des Verfahrens gemäß einem der Ansprüche 7 und 12, wenn das Computerprogramm auf einer Computervorrichtung ausgeführt wird.

## Revendications

**1.** Dispositif cible configuré pour être attesté par un évaluateur (501) par une attestation à distance, le dispositif cible (502) comprenant un gestionnaire de machines virtuelles, VMM, (505) exécutant une ou plusieurs machines virtuelles (504), et étant configuré pour :

- recevoir (601) de l'évaluateur (501) une demande d'attestation,
- collecter (602, 603) des informations d'attestation de machine virtuelle (vPCR, vSML) concernant lesdites une ou plusieurs machines virtuelles (504),
- générer une valeur d'intégrité de machine virtuelle (H) en concaténant au moins une partie des informations d'attestation de machine virtuelle (vPCR) collectées,
- générer une signature numérique (Quote(PCR, H)$_{AIK}$) pour le VVM (505) à partir de la valeur d'intégrité de machine virtuelle (H), et
- envoyer (606) la signature numérique (Quote(PCR, H)$_{AIK}$) générée et les informations d'attestation de machine virtuelle (vPCR, vSML) à l'évaluateur (501) en tant que réponse à la demande d'attestation, le dispositif cible comprenant également
- un module de sécurité (509, TPM) configuré pour générer la signature numérique (Quote(PCR, H)$_{AIK}$) pour le VMM (505),

la signature numérique (Quote(PCR, H)$_{AIK}$) étant générée à partir de la valeur d'intégrité de machine virtuelle (H) et d'une valeur de registre de mémoire (PCR) correspondant au module de sécurité (509), la valeur de registre de mémoire (PCR) contenant au moins une mesure du VMM (505), le dispositif cible étant également configuré pour :

- générer un rapport de mesure de VMM (SML), le rapport de mesure de VMM comprenant au moins une mesure de VMM, et
- envoyer (606) le rapport de mesure de VMM (SML) à l'évaluateur (501) en même temps que la signature numérique (Quote(PCR, H)$_{AIK}$) générée et les informations d'attestation de machine virtuelle (vPCR, vSML).

**2.** Dispositif cible selon la revendication 1,
dans lequel chaque machine virtuelle (504) est associée à un module de sécurité virtuel (506) et à une valeur de registre de mémoire virtuelle (vPCR) correspondante, la valeur de registre de mémoire virtuelle (vPCR) contenant au moins une mesure de machine virtuelle de la machine virtuelle (504) associée, et
dans lequel la valeur d'intégrité de machine virtuelle (H) est calculée d'après ladite au moins une valeur de registre de mémoire virtuelle (vPCR).

**3.** Dispositif cible (502) selon la revendication 2,
dans lequel les informations d'attestation de machine virtuelle contiennent également un rapport de mesure de machine virtuelle (vSML) pour chaque machine virtuelle, le rapport de mesure de machine virtuelle (vSML) contenant au moins une mesure de machine virtuelle de la machine virtuelle correspondante, et
la valeur de registre de mémoire virtuelle (vPCR) contient au moins une mesure de machine virtuelle de la machine virtuelle (504) associée, du fait que la valeur de registre de mémoire virtuelle (vPCR) est une concaténation de ladite au moins une mesure de machine virtuelle contenue dans le rapport de mesure de machine virtuelle (vSML).

**4.** Dispositif cible selon l'une quelconque des revendications précédentes, comprenant :

- un gestionnaire d'attestation (503) configuré pour calculer (715) la valeur d'intégrité de machine virtuelle (H) en concaténant la valeur de registre de mémoire virtuelle (vPCR) d'au moins une machine virtuelle (504),

dans lequel :

- le module de sécurité (509, TPM) est configuré pour recevoir comme entrée la valeur d'intégrité de machine virtuelle et générer la signature numérique (*Quote(PCR, H)$_{AIK}$*) au moyen d'une clé privée (AIK).

**5.** Dispositif cible selon la revendication 3 ou 4,
le dispositif cible étant configuré pour collecter les informations d'attestation de machine virtuelle (vPCR, vSML) d'au moins une machine virtuelle en :

- lisant (711, 712) la valeur de registre de mémoire virtuelle (vPCR) du module de sécurité virtuelle (506) correspondant à ladite au moins une machine virtuelle, et
- recevoir (714) le rapport de mesure de machine virtuelle (vSML) stocké dans ladite au moins une machine virtuelle (504).

**6.** Dispositif cible selon l'une quelconque des revendications 3 à 5,
dans lequel la demande d'attestation reçue de l'évaluateur (501) comprend un nombre de circonstance, le dispositif cible étant configuré pour :

- générer la valeur d'intégrité de machine virtuelle (H) à partir de ladite au moins une partie des informations d'attestation de machine virtuelle (vPCR) collectées et du nombre de circonstance.

**7.** Procédé pour répondre à une demande d'attestation reçue par un dispositif cible (502) en provenance d'un évaluateur (501) concernant une attestation à distance du dispositif cible (502),
le dispositif cible (502) comprenant un gestionnaire de machines virtuelles, VMM, (505) s'exécutant sur une ou plusieurs machines virtuelles (504), et
dans lequel le dispositif cible

- reçoit (601) de l'évaluateur (501) la demande d'attestation,
- collecte (602, 603) des informations d'attestation de machine virtuelle (vPCR, vSML) concernant lesdites une ou plusieurs machines virtuelles (504),
- génère une valeur d'intégrité de machine virtuelle (H) en concaténant au moins une partie des informations d'attestation de machine virtuelle (vPCR) collectées,
- génère, au niveau d'un module de sécurité (509, TPM), une signature numérique (Quote(PCR, H)$_{AIK}$) pour le VVM (505) à partir de la valeur d'intégrité de machine virtuelle (H), et
- envoie (606) la signature numérique (Quote(PCR, H)$_{AIK}$) générée et les informations d'attestation de machine virtuelle (vPCR, vSML) à l'évaluateur (501) en tant que réponse à la demande d'attestation,
la signature numérique (Quote(PCR, H)$_{AIK}$) étant générée à partir de la valeur d'intégrité de machine virtuelle (H) et d'une valeur de registre de mémoire (PCR) correspondant au module de sécurité (509), la valeur de registre de mémoire (PCR) contenant au moins une mesure du VMM (505)
dans lequel le dispositif cible, également,
- génère un rapport de mesure de VMM (SML), le rapport de mesure de VMM comprenant au moins une mesure de VMM, et
- envoie (606) le rapport de mesure de VMM (SML) à l'évaluateur (501) en même temps que la signature numérique (Quote(PCR, H)$_{AIK}$) générée et les informations d'attestation de machine virtuelle (vPCR, vSML).

8. Évaluateur pour l'attestation à distance d'un dispositif cible (502) comprenant un gestionnaire de machines virtuelles, VMM, (505) exécutant une ou plusieurs machines virtuelles (504), l'évaluateur (501) étant configuré pour :

- envoyer (601) une demande d'attestation au dispositif cible (502),
- recevoir (606) du dispositif cible (502) une réponse à la demande d'attestation comprenant une signature numérique (Quote(PCR, H)$_{AIK}$) pour le VVM (505) et des informations d'attestation de machine virtuelle (vPCR, vSML) concernant lesdites une ou plusieurs machines virtuelles (504),
- obtenir une première valeur d'intégrité de machine virtuelle (H) à partir de la signature numérique (Quote(PCR, H)$_{AIK}$),
- calculer une deuxième valeur d'intégrité de machine virtuelle (H) en concaténant au moins une partie des informations d'attestation de machine virtuelle (vPCR), et
- vérifier l'intégrité des informations d'attestation de machine virtuelle (vPCR, vSML) reçues en fonction d'une comparaison des première et deuxième valeurs d'intégrité de machine virtuelle (H),
- obtenir une valeur de registre de mémoire (PCR) à partir de la signature numérique (Quote(PCR, H)$_{AIK}$), la valeur de registre de mémoire (PCR) stockant au moins une mesure de la VMM (505), la réponse reçue à la demande d'attestation comprenant un rapport de mesure de VMM (SML), le rapport de mesure de VMM comprenant au moins une mesure de VMM, et

l'évaluateur étant configuré pour attester le VMM d'après la valeur de registre de mémoire (PCR) et le rapport de mesure de VMM (SML).

9. Évaluateur selon la revendication 8,
dans lequel les informations d'attestation de machine virtuelle (vPCR, vSML) reçues comprennent une valeur de registre de mémoire virtuelle (vPCR) pour au moins une machine virtuelle (504), la valeur de registre de mémoire virtuelle (vPCR) contenant au moins une mesure de machine virtuelle de la machine virtuelle (504), et l'évaluateur étant configuré pour calculer la deuxième valeur d'intégrité de machine virtuelle (H) d'après la ou des valeurs de registre de mémoire virtuelles (vPCR).

10. Évaluateur selon la revendication 9,
dans lequel les informations d'attestation de machine virtuelle contiennent également un rapport de mesure de machine virtuelle (vSML) pour au moins une machine virtuelle, le rapport de mesure de machine virtuelle (vSML) contenant au moins une mesure de machine virtuelle de la machine virtuelle correspondante, et
la valeur de registre de mémoire virtuelle (vPCR) contient au moins une mesure de machine virtuelle de la machine virtuelle (504) associée, du fait que la valeur de registre de mémoire virtuelle (vPCR) est une concaténation de ladite au moins une mesure de machine virtuelle contenue dans le rapport de mesure de machine virtuelle (vSML), l'évaluateur étant configuré pour attester les machines virtuelles (504) d'après la valeur de registre de mémoire virtuelle (vPCR) et le rapport de mesure de machine virtuelle (vSML) de chaque machine virtuelle.

11. Évaluateur selon l'une quelconque des revendications 8 à 10,
dans lequel la demande d'attestation comprend un nombre de circonstance, l'évaluateur étant configuré pour calculer la deuxième valeur d'intégrité de machine virtuelle (H) au moins en partie à partir desdites informations d'attestation de machine virtuelle (vPCR) reçues et du nombre de circonstance.

12. Procédé pour l'attestation à distance d'un dispositif cible (502) comprenant un gestionnaire de machines virtuelles, VMM, (505) exécutant une ou plusieurs machines virtuelles (504), le procédé comprenant les étapes consistant à :

- envoyer (601) une demande d'attestation au dispositif cible (502),
- recevoir (606) du dispositif cible (502) une réponse à la demande d'attestation comprenant une signature numérique (Quote(PCR, H)$_{AIK}$) pour le VVM (505) et des informations d'attestation de machine virtuelle (vPCR, vSML) concernant lesdites une ou plusieurs machines virtuelles (504),
- obtenir une première valeur d'intégrité de machine virtuelle (H) à partir de la signature numérique (Quote(PCR, H)$_{AIK}$),

- calculer une deuxième valeur d'intégrité de machine virtuelle (H) en concaténant au moins une partie des informations d'attestation de machine virtuelle (vPCR), et
- vérifier l'intégrité des informations d'attestation de machine virtuelle (vPCR, vSML) reçues en fonction d'une comparaison des première et deuxième valeurs d'intégrité de machine virtuelle (H),
- obtenir une valeur de registre de mémoire (PCR) à partir de la signature numérique (Quote(PCR, H)$_{AIK}$), la valeur de registre de mémoire (PCR) stockant au moins une mesure de la VMM (505),

la réponse reçue à la demande d'attestation comprenant un rapport de mesure de VMM (SML), le rapport de mesure de VMM comprenant au moins une mesure de VMM, et l'évaluateur étant configuré pour attester le VMM d'après la valeur de registre de mémoire (PCR) et le rapport de mesure de VMM (SML).

13. Système comprenant un dispositif cible (502) selon l'une quelconque des revendications 1 à 6, et un évaluateur (501) selon l'une quelconque des revendications 8 à 11.

14. Programme informatique possédant un code de programme servant à effectuer le procédé selon l'une quelconque des revendications 7 et 12, lorsque le programme informatique s'exécute sur un dispositif informatique.

**TPM**

| | Cryptographic Processor | Persistent Storage |
|---|---|---|
| S E C U R E  I / O | Random Number Generaor | Endorsement Key (EK) |
| | RSA Key Generator | Storage Root Key (SRK) |
| | SHA-1 Hash Generator | Platform Configuration Registers (PCR) |
| | Encryption Engine | |
| | | Versatile Storage |
| | | Attestation Identity Keys (AIK) |
| | | Key Storage |

**Fig. 1**

Hardware

CRTM — 1 → BIOS — 5 → Bootloader — 8 → OS

3  4  7  10

2  6  9

TPM

PCR

Measuring →
Passing control ⇢
Storing ●

**Fig. 2**

**Fig. 3**

**Fig. 4**

Fig. 5

Fig. 6

711
712
713
714

715 — calculateExtData
(Nonce, vPCRs)

700

**Fig. 7**

811
812
813
814

800

**Fig. 8**

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- TPM Main Specification Version 1.2. Trusted Computing Group, 2011
- Virtualized Trusted Platform Architecture Specification. Trusted Computing Group, 2011
- **GEORGE COKER et al.** Principles of Remote Attestation The MITRE Corporation. *National Security Agency,* 2011
- **AHMAD-REZA SADEGHI et al.** Property-Based TPM Virtualization. Ruhr-University Bochum, 2008
- TPM Main Specification Versionl.2. Trusted Computing Group, 2011
- Obtaining the integrity of your virtual machine in the cloud. **AIMIN YU et al.** CLOUD COMPUTING TECHNOLOGY AND SCIENCE (CLOUDCOM), 2011 IEEE THIRD INTERNATIONAL CONFERENCE ON. IEEE, 29 November 2011, 213-222
- **ABDUL BASIT.** *Royal Institute of Technology, Sweden Master Thesis APPROACHES FOR ATTESTING VIRTUALIZED ENVIRONMENTS*